# EUROPEAN PATENT SPECIFICATION

(11) **EP 1 165 954 B1**
(45) Date of publication and mention of the grant of the patent: **08.01.2003**
(21) Application number: 00910579.2
(22) Date of filing: 17.03.2000
(51) Int. Cl.: F02F 3/00, F16J 1/12

(54) **A PISTON AND A PISTON ROD FOR AN INTERNAL COMBUSTION ENGINE**
KOLBEN UND KOLBENSTANGE FÜR EINE BRENNKRAFTMASCHINE
TIGE DE PISTON ET PISTON POUR MOTEUR A COMBUSTION INTERNE

(30) Priority: 07.04.1999 DK 45899
(43) Date of publication of application: 02.01.2002
(73) Proprietor: MAN B & W Diesel A/S, 2450 Copenhagen SV (DK)
(72) Inventor: JENSEN, Soeren, Helmuth, DK-2942 Skodsborg (DK)
(74) Representative: Indahl, Peter Jensen
(86) International application number: DK0000123
(87) International publication number: WO00061935

(56) References cited:
- DE-C- 603 581
- DATABASE WPI Week 199644, Derwent Publications Ltd., London, GB; AN 1996-440622, XP002948703 & JP 08 218 940 A (MITSUBISHI HEAVY IND LTD) 27 August 1996 & PATENT ABSTRACTS OF JAPAN & JP 08 218 940 A
- DATABASE WPI Week 199643, Derwent Publications Ltd., London, GB; AN 1996-427954, XP002948704 & JP 08 210 180 A (MITSUBISHI HEAVY IND LTD) 20 August 1996 & PATENT ABSTRACTS OF JAPAN & JP 08 210 180 A

## Description

The present invention relates to a piston for an internal combustion engine, the piston having a piston top which, at a distance from the longitudinal centre axis of the piston, has an abutment surface extending in the circumferential direction of the piston and being adapted to be clamped against an abutment surface on a piston rod.

JP 8-218940 describes a piston for a diesel engine, the piston top of the piston having an internal downwardly projecting peripheral rib, which is clamped against a piston rod by means of bolts. In a radially cross-sectional view, the rib has a semi-circular projection abutting on a corresponding semi-circular recess in the piston rod. As a consequence of expansions in the piston top by heating thereof, the rib can perform an angular rotation in relation to the piston rod, the semi-circular projection being able to turn in the recess, whereby a maximum abutment surface is maintained at all times for transmission of force between the rib and the piston rod. This results in a constant, even load on the rib, whereby fatigue fractures, particularly around the thread of the bolts, can be avoided.

JP 8-210180 shows a piston for a diesel engine, in which the piston top, in addition to being clamped against the piston rod by an internal rib, is also clamped against it at a downwardly facing abutment surface on the outer wall of the piston top, thus distributing the load between piston and piston rod across these two clamping locations. The abutment surface at the outer wall is semi-circular to have the same effect as described for JP 8-218940.

However, as a consequence of the very large dynamic loads transmitted from the piston top to the piston rod, the material on the contact surfaces between piston top and piston rod in prior-art pistons sometimes tends to degenerate to some degree.

The object of the present invention is to provide a piston that has a better stability of the abutment surface transmitting the load from the piston top to the piston rod.

In view of this, the piston according to the invention is characterized in that the abutment surface of the piston top comprises a first surface, which, in a radially cross-sectional view, extends in a straight line and forms an angle of between 2° and 88° with a normal plane to the longitudinal centre axis of the piston, and a secondary surface, which forms an angle of less than 178° or more than 182° with the first surface.

The abutment surface may thus comprise two surfaces each of which, in a radially cross-sectional view of the piston, is defined by a straight line, the lines being mutually angled by at least 2°. This provides an extremely stable transmission of the dynamic forces from the piston top to the piston rod, since the possibility of even very small mutual displacements of the abutment surfaces of the piston top and the piston rod, respectively, is reduced and the risk of degeneration of the material on the contact surfaces is substantially reduced.

In pistons where the dynamic influences acting on the piston top in operation seek to press its abutment surface towards the longitudinal centre axis of the piston in relation to the abutment surface of the piston rod, the first surface of the piston top may, in the radially outward direction, incline away from the top side of the piston facing the combustion chamber, thus counteracting displacement of the abutment surface of the piston in relation to the abutment surface of the piston rod.

The present invention also relates to a piston rod for an internal combustion engine, the piston rod having an abutment surface which is located at a distance from its longitudinal centre axis, extends in the circumferential direction of the piston rod and is adapted to be clamped against an abutment surface of a piston top.

The piston rod according to the invention is characterized in that the abutment surface of the piston rod comprises a first surface which, in a radially cross-sectional view, extends in a straight line and forms an angle of between 2° and 88° with a normal plane to the longitudinal centre axis of the piston, and a secondary surface which forms an angle of less than 178° or more than 182° with the first surface. In the radially outward direction, the first surface may incline towards the opposite end of the piston rod. Thereby the advantages described above are achieved.

The piston or the piston rod may be adapted so that its first surface, in a radially cross-sectional view, forms an angle of 3° - 20°, and preferably 5° - 13°, with a normal plane to the longitudinal centre axis of the piston or the piston rod. This allows a suitable proportion between the extent of the contact surface between piston top and piston rod in the direction of the centre axis and the radial direction, respectively. As the largest load occurs in the axial direction, abutment surfaces extending in the direction of the centre axis will deform differently along their mutual contact surface owing to the elasticity of the material. It is therefore desirable to limit the extent of the contact surface in the direction of the centre axis.

Furthermore, the secondary surface may be substantially parallel with the normal plane to the longitudinal centre axis of the piston or the piston rod. This provides a good proportion between the transmission of the axial and the radial forces. As mentioned, the axial forces are larger, and a surface at right angles to the centre axis transmits these forces best. Furthermore such a surface is cheaper to manufacture than, for example, a conical surface.

The first surface may be radially outermost in relation to the secondary surface.

Additionally, the abutment surface may extend over a distance which, in the direction of the centre axis, is less than 0.5 times and preferably less than 0.2 times the distance over which it extends in the radial direction. This limits the extent of the contact surface in the direction of the centre axis, and the mutual displacement of the abutment surfaces clamped against each other is reduced as explained above.

A recess, preferably having soft roundings, may be formed between the first surface and the secondary surface.

The present invention furthermore relates to a ring or an annular member for being clamped between a piston and a piston rod. The member is characterized in that it has a first abutment surface of a shape substantially corresponding to the shape of the abutment surface of the piston, and a secondary abutment surface of a shape substantially corresponding to the shape of the abutment surface of the piston rod.

The ring or the annular member may be made of another material than the piston top or the piston rod, allowing for the use of a material having especially favourable contact properties in relation to the material of the piston top or the piston rod. The ring material may, for example, be softer or harder than the material of the piston top or the piston rod.

The invention will now be explained in more detail below by means of examples of embodiments with reference to the schematic drawing, in which
Fig. 1 is a cross-sectional view of a conventional piston mounted on a piston rod,
Fig. 2 is a radially cross-sectional view of an enlarged segment of a piston mounted on a piston rod, with abutment surfaces according to the invention,
Figs. 3 to 9 are cross-sectional views corresponding to that of Fig. 2 of different embodiments,
Figs. 10 and 11 are cross-sectional views corresponding to that of Fig. 2 of embodiments having an annular member clamped between piston top and piston rod,
Fig. 12 is a cross-sectional view of the abutment surfaces of the piston top and the piston rod in a cold condition of a conventional piston as shown in Fig. 1, and
Fig. 13 is a cross-sectional view corresponding to that of Fig. 12, but of the abutment surfaces of a piston and a piston rod according to the invention, also in a cold condition.

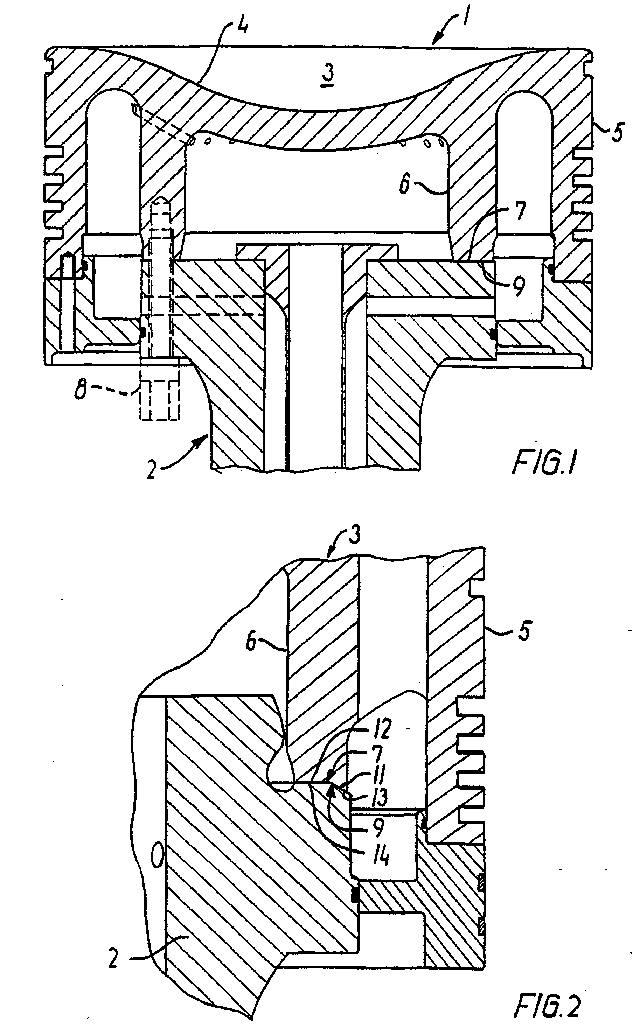

Fig. 1 shows a conventional piston 1 mounted on a piston rod 2. The piston is intended for a two-stroke diesel engine and, depending on engine size, may be manufactured in different sizes with diameters typically in the interval from 250 mm to 1000 mm.

During the combustion in the engine, the cylinder pressure above the piston rises to a maximum combustion pressure, which may, for example, be between 160 and 200 bar, and simultaneously the temperature at the upper end of the cylinder rises to more than 500°C. The piston transmits very large loads to the piston rod, and heavy demands are therefore made on the joint between piston 1 and piston rod 2.

The piston 1 has a cylinder-shaped piston top 3 formed as an integral element, which may possibly be cast and which comprises a top wall 4, the upper surface of which may be concave or convex and possibly faced with a special heat-resistant facing welded on, a downwardly extending cylinder-shaped outer wall 5 forming the upper part of the outer surface of the piston, and in the lower part of which several piston rings, not shown, are embedded in a known manner in circular grooves, and an also downwardly extending cylindrical rib-shaped area 6, which is located inside the outer wall 5 and has a lower horizontal abutment surface 7 clamped in a known manner against an upper abutment surface 9 of the piston rod 2 by means of a number of bolts 8. The rib 6 is therefore the supporting member which transmits the large forces between the piston 1 and the piston rod 2 during operation of the engine.

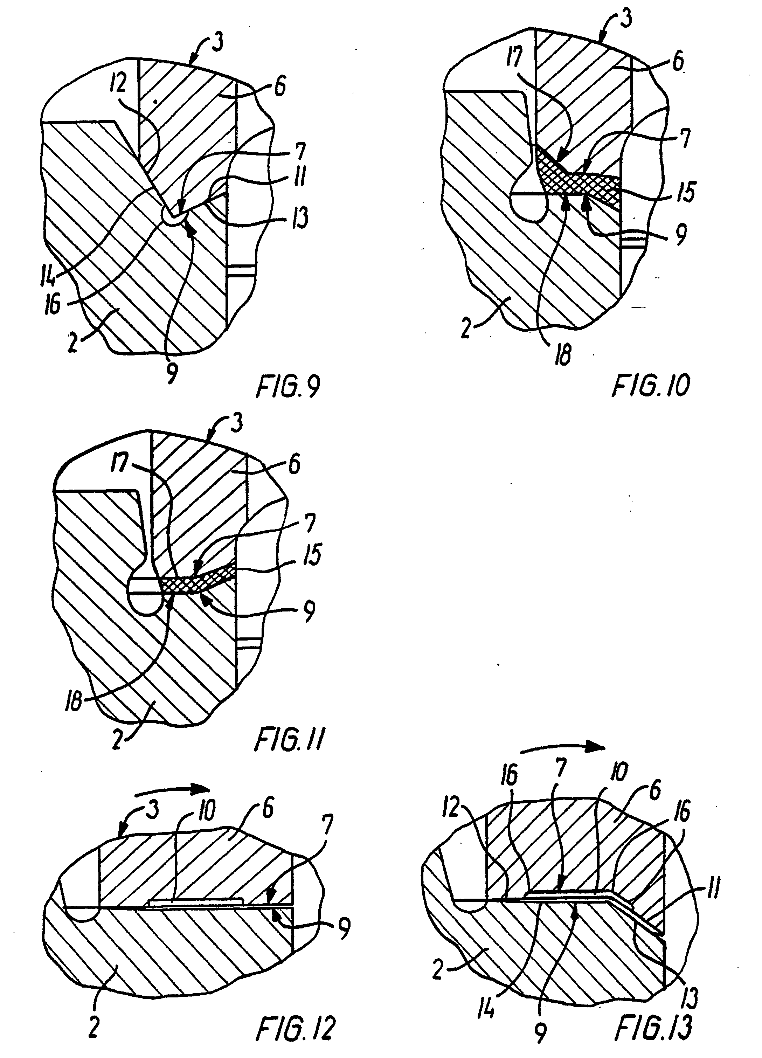

The abutment surfaces 7, 9 of the piston top 3 and the piston rod 2, respectively, are conventionally formed at right angles to the centre axis of the piston, but one or both surfaces may be slightly conical so that the abutment surface 7 of the rib 6 and the abutment surface 9 of the piston rod 2 in the cold condition of the piston 1, when it is not clamped against the piston rod 2, have a gap of a few micrometres at the radially outermost rim thereof, see Fig. 12, where this gap is exaggerated for the sake of clarity. The gap is partially equalized when the piston top 3 is clamped against the piston rod, and as the piston top 3 expands most in the central area of the top wall 4 upon heating to operating temperature, a small angular rotation of the rib-shaped area 6 occurs in the direction of the arrow, thus providing complete equalization of the gap, a uniform contact pressure across the entire extent of the abutment surfaces 7, 9 and an even load on the rib-shaped area 6. Furthermore, the abutment surface 7 of the piston top 3 is typically formed with an annular recess 10 so that the material of the rib in the recess 10 will not abut on the abutment surface 9 of the piston rod and therefore can be machined to a rougher tolerance, see Fig. 12. Some of the through holes for the clamping bolts 8 can communicate with the oil chamber between the piston top 3 and the skirt by means of bores, not shown, and as the bolt holes intercommunicate via the recess 10, any oil captured in the bolt holes and the recess 10 can escape, which prevents an inappropriate build-up of pressure in the recess 10.

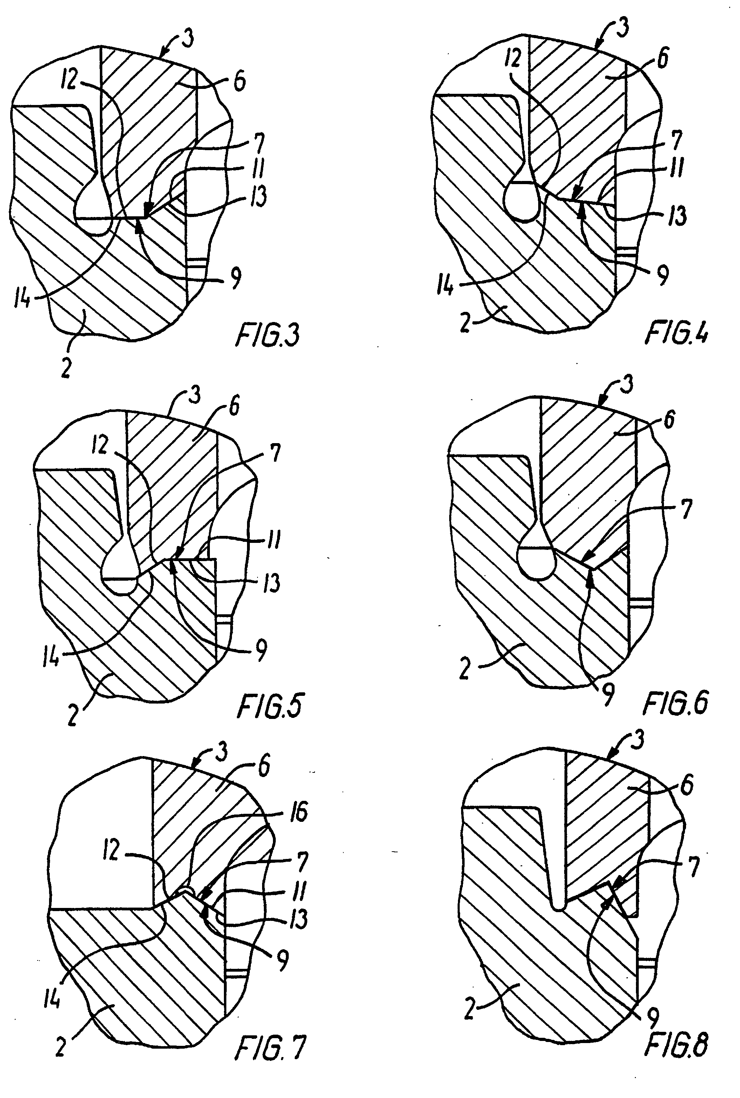

Figs. 2 to 9 show different embodiments according to the invention of the abutment surfaces 7, 9 of the piston top 3 and the piston rod 2, respectively, the same reference numerals being used for corresponding elements as for the conventional piston in Fig. 1. It appears that the abutment surface 7 of the piston top 3 comprises a radially outermost first surface 11 and a radially innermost secondary surface 12. The abutment surface 9 of the piston rod 2 comprises a first surface 13 opposite to and corresponding to the shape of the first surface 11 of the piston top 3, and a secondary surface 14 opposite to and corresponding to the shape of the secondary surface 12 of the piston top 3. Corresponding to the conventional design, the surfaces 11, 12, 13, 14 can in practice have an intermediate recess 10 machined to a rougher tolerance, thus providing a more economical manufacture, see Fig. 13. The recess 10 may possible comprise or extend into a rounding 16, which forms a stress-reducing soft transition between the first and the secondary surfaces, respectively, as shown in Figs. 7 and 9. Likewise, the first surfaces 11, 13 and the secondary surfaces 12, 14, respectively, may be formed so that in a cold and unclamped condition of the piston top 3 they extend with an increasingly thin gap between them so that at the radially outermost rim of the abutment surfaces 7, 9 a gap of a few micrometres occurs, see Fig. 13. During operation this provides an even distribution of stress in the rib-shaped area 6 as explained above.

In a radially cross-sectional view of the piston 1, the first surfaces 11, 13 and the secondary surfaces 12, 14 extend in a straight line and are mutually angled, thus providing a very stable clamping of the abutment surfaces 7, 9. Influences on the abutment surfaces owing to the very large dynamic loads on the piston during operation can thus be reduced, as mutual movements as small as just a few micrometres of the abutment surfaces 7, 9 can be counteracted, and this can reduce the risk of unfortunate injurious effects, such as fretting, on the abutment surfaces 7, 9.

Fig. 2 shows an embodiment in which, in the radially outward direction, the first radially outermost surfaces 11, 13 incline away from the top wall 4 of the piston top, and the secondary surfaces 12, 14 are substantially at right angles to the centre axis of the piston 1 so that radially inward displacements of the rib 6 at its abutment surface 7 are counteracted. This effect can also be obtained by the embodiment of Fig. 4, in which the secondary radially innermost surfaces 12, 14 incline away from the top wall 4 of the piston top.

Figs. 3 and 5 show embodiments in which a displacement of the abutment surface 7 of the rib 6 radially away from the centre axis of the piston 1 is counteracted, the abutment surfaces 7, 9 in these embodiments in a radially cross-sectional view being substantially mirrored about an axis extending through the rib-shaped area 6 in parallel with the centre axis of the piston 1, compared with the embodiments of Figs. 2 and 4.

Figs. 6 to 9 show embodiments in which a displacement of the abutment surface 7 of the rib-shaped area 6 is radially prevented in both directions in relation to the abutment surface 9 of the piston rod 2, as both the first surfaces 11, 13 and the secondary surfaces 12, 14 are mutually angled and angled in relation to the normal plane to the centre axis of the piston 1. Fig. 9, for example, shows an embodiment in which the secondary radially innermost surfaces 12, 14 are more steep in relation to the normal plane to the centre axis than the first surfaces 11, 13, whereby substantially radially inward movements of the abutment surface 7 of the rib 6 are counteracted. It should be noted that the extent of the secondary surfaces 12, 14 in the axial direction of the piston is limited to reduce the possible mutual movement thereof owing to different dynamic compression of the material in the piston top and the piston rod, respectively.

Figs. 10 and 11 show embodiments in which an annular member 15 is clamped between the abutment surface 7 of the piston top 3 and the abutment surface 9 of the piston rod 2. The annular member 15 has abutment surfaces having shapes corresponding to the shapes of the abutment surfaces 7, 9 of piston top 3 and piston rod 2, and may be an insert, for example, carrying nozzles for coolant or the like, or it may be a ring of a material having especially good contact properties in relation to the material of the piston top 3 and the piston rod 2.

Although the invention has been described for a piston having a rib-shaped area 6 located inside the outer wall, it is clear that the abutment surfaces 7, 9 according to the invention can be used on pistons having other designs with abutment surfaces at a distance from the centre axis of the piston; the abutment surfaces may, for example, be formed at the outer wall of a piston top, or both on an internal rib-shaped area and at the same time at an outer wall. The abutment surfaces may also be located on piston top and piston skirt, respectively, and possibly at the same time between piston skirt and piston rod, the piston skirt then being considered an annular member clamped between piston and piston rod, or as part of the piston top or of the piston rod. It is also clear that the abutment surfaces 7, 9 may extend continuously or discontinuously in the circumferential direction of the piston, and that bolts for clamping together the piston top 3 and the piston rod 2 can extend through the abutment surfaces 7, 9 or outside thereof.

## Claims

1. A piston (1) for an internal combustion engine, the piston having a piston top (3) which, at a distance from the longitudinal centre axis of the piston, has an abutment surface (7) extending in the circumferential direction of the piston and being adapted to be clamped against an abutment surface (9) of a piston rod (2), **characterized in that** the abutment surface (7) of the piston top comprises a first surface (11), which, in a radially cross-sectional view, extends in a straight line and forms an angle of between 2° and 88° with a normal plane to the longitudinal centre axis of the piston (1), and a secondary surface (12) which forms an angle of less than 178° or more than 182° with the first surface (11).

2. A piston (1) according to claim 1, **characterized in that** in the radially outward direction the first surface (11) inclines away from the top side (4) of the piston (1) facing the combustion chamber.

3. A piston rod (2) for an internal combustion engine, the piston rod having an abutment surface (9) which is located at a distance from its longitudinal centre axis, extends in the circumferential direction of the piston rod and is adapted to be clamped against an abutment surface (7) of a piston top (3), **characterized in that** the abutment surface (9) of the piston rod (2) comprises a first surface (13) which, in a radially cross-sectional view, extends in a straight line and forms an angle of between 2° and 88° with a normal plane to the longitudinal centre axis of the piston rod (2), and a secondary surface (14) which forms an angle of less than 178° or more than 182° with the first surface (13).

4. A piston rod (2) according to claim 3, **characterized in that**, in the radially outward direction, the first surface (13) inclines towards the opposite end of the piston rod (2).

5. A piston (1) or a piston rod (2) according to any one of the preceding claims, **characterized in that** the first surface (11, 13), in a radially cross-sectional view, forms an angle of 3° - 20°, and preferably 5° - 13°, with a normal plane to the longitudinal centre axis of the piston (1) or the piston rod (2).

6. A piston (1) or a piston rod (2) according to any one of the preceding claims, **characterized in that** the secondary surface (12, 14) is substantially parallel with the normal plane to the longitudinal centre axis of the piston (1) or the piston rod (2).

7. A piston (1) or a piston rod (2) according to any one of the preceding claims, **characterized in that** the first surface (11, 13) is radially outermost in relation to the secondary surface (12, 14).

8. A piston (1) or a piston rod (2) according to any one of the preceding claims, **characterized in that** the abutment surface (7, 9) extends over a distance which, in the direction of the centre axis, is less than 0.5 times and preferably less than 0.2 times the distance over which it extends in the radial direction.

9. A piston (1) or a piston rod (2) according to any one of the preceding claims, **characterized in that** a recess (10), preferably having soft roundings (16), is formed between the first surface (11, 13) and the secondary surface (12, 14).

10. A ring or an annular member (15) for being clamped between a piston (1) according to claims 1, 2 or 5 - 9 and a piston rod (2) according to claims 3 - 9, **characterized in that** the ring or the annular member has a first abutment surface (17) of a shape substantially corresponding to the shape of the abutment surface (7) of the piston (1), and a secondary abutment surface (18) of a shape substantially corresponding to the shape of the abutment surface (9) of the piston rod (2).

11. A ring or an annular member (15) according to claim 10, **characterized in that** the ring or the annular member is made of another material than the piston top (3) or the piston rod (2), and preferably of a material which is softer or harder than the material of the piston top (3) or the piston rod (2).

## Patentansprüche

1. Kolben (1) für eine Brennkraftmaschine, in der der Kolben ein Kolbenoberteil (3) aufweist, das in einem Abstand von der zentralen Längsachse des Kolbens eine Stützfläche (7) hat, die sich in Umfangsrichtung des Kolbens erstreckt und mit einer Stützfläche (9) einer Kolbenstange (2) verspannbar ist, **dadurch gekennzeichnet, dass** die Stützfläche (7) des Kolbenoberteils eine erste Oberfläche (11), die sich in einer Radialschnittansicht in einer geraden Linie ausdehnt und mit einer zu der zentralen Längsachse des Kolbens (1) normalen Fläche einen Winkel zwischen 2° und 88° bildet, und eine zweite Oberfläche (12) umfasst, die mit der ersten Oberfläche (11) einen Winkel von weniger als 178° oder mehr als 182° bildet.

2. Kolben (1) nach Anspruch 1, **dadurch gekennzeichnet, dass** in der radial nach außen gewandten Richtung die erste Oberfläche (11) von der Oberseite (4) des Kolbens (1) weggeneigt ist, welche an die Brennkammer angrenzt.

3. Kolbenstange (2) für eine Brennkraftmaschine, wobei die Kolbenstange eine in einem Abstand von ihrer zentralen Längsachse angeordnete, sich in der Umfangsrichtung der Kolbenstange ausdehnende Stützfläche (9) aufweist, die mit einer Stützfläche (7) eines Kolbenoberteils (3) verspannbar ist, **dadurch gekennzeichnet, dass** die Stützfläche (9) der Kolbenstange (2) eine erste Oberfläche (13), die sich in einer Radialschnittansicht in einer geraden Linie ausdehnt und mit einer zu der zentralen Längsachse der Kolbenstange (2) normalen Fläche einen Winkel zwischen 2° und 88° bildet und eine zweite Oberfläche (14) umfasst, die mit der ersten Oberfläche (13) einen Winkel von weniger als 178° oder mehr als 182° bildet.

4. Kolbenstange (2) nach Anspruch 3, **dadurch gekennzeichnet, dass** die erste Oberfläche (13) in der radial nach außen gerichteten Richtung zu dem entgegengesetzten Ende der Kolbenstange (2) hin geneigt ist.

5. Kolben (1) oder Kolbenstange (2) nach einem der vorhergehenden Ansprüche, **dadurch gekennzeichnet, dass** die erste Oberfläche (11, 13) in einer Radialschnittansicht einen Winkel von 3° - 20°, und bevorzugt von 5° - 13°, mit einer zu der zentralen Längsachse des Kolbens (1) oder der Kolbenstange (2) normalen Fläche bildet.

6. Kolben (1) oder Kolbenstange (2) nach einem der vorhergehenden Ansprüche, **dadurch gekennzeichnet, dass** die zweite Oberfläche (12, 14) im wesentlichen parallel zu der zu der zentralen Längsachse des Kolbens (1) oder der Kolbenstange (2) normalen Fläche ist.

7. Kolben (1) oder Kolbenstange (2) nach einem der vorhergehenden Ansprüche, **dadurch gekennzeichnet, dass** die erste Oberfläche (11, 13) radial außerhalb der zweiten Oberfläche (12, 14) ist.

8. Kolben (1) oder Kolbenstange (2) nach einem der vorhergehenden Ansprüche, **dadurch gekennzeichnet, dass** sich die Stützfläche (7, 9) über einen Abstand erstreckt, der in Richtung zu der zentralen Achse weniger als das 0, 5-fache und vorzugsweise weniger als das 0,2-fache der Distanz beträgt, über die sie sich in radialer Richtung erstreckt.

9. Kolben (1) oder Kolbenstange (2) nach einem der vorhergehenden Ansprüche, **dadurch gekennzeichnet, dass** eine Ausnehmung (10), vorzugsweise mit weichen Rundungen (16), zwischen der ersten Oberfläche (11, 13) und der zweiten Oberfläche (12, 14) vorgesehen ist.

10. Ring oder ringförmiges Bauelement (15), das zwischen einem Kolben (1) nach einem der Ansprüche 1, 2 oder 5 - 9 und einer Kolbenstange (2) nach einem der Ansprüche 3 - 9 einspannbar ist, **dadurch gekennzeichnet, dass** der Ring oder das ringförmige Bauelement eine erste Stützfläche (17) mit einer Form hat, die im wesentlichen der Form der Stützfläche (7) des Kolbens (1) entspricht, und eine zweite Stützfläche (18) mit einer Form aufweist, die im wesentlichen der Form der Stützfläche (9) der Kolbenstange (2) entspricht.

11. Ring oder ringförmiges Bauelement (15) nach Anspruch 10, **dadurch gekennzeichnet, dass** der Ring oder das ringförmige Bauelement aus einem anderen Material hergestellt ist als das Kolbenoberteil (3) oder die Kolbenstange (2), und vorzugsweise aus einem Material besteht, das weicher oder härter als das Material des Kolbenoberteils (3) oder der Kolbenstange (2) ist.

## Revendications

1. Piston (1) pour moteur à combustion interne, le piston ayant un fond (3) de piston qui, à une certaine distance de l'axe longitudinal central du piston, comporte une surface de butée (7) s'étendant dans la direction circonférentielle du piston et conçue pour être serrée contre une surface de butée (9) d'une tige (2) de piston, **caractérisé en ce que** la surface de butée (7) du fond de piston comporte une première surface (11) qui, vue en coupe radiale, s'étend en ligne droite et forme un angle compris entre 2° et 88° avec un plan perpendiculaire à l'axe longitudinal central du piston (1), et une surface secondaire (12) qui forme un angle inférieur à 178° ou supérieur à 182° avec la première surface (11).

2. Piston (1) selon la revendication 1, **caractérisé en ce que**, dans la direction radialement vers l'extérieur, la première surface (11) est inclinée à l'opposé du côté supérieur (4) du piston (1), ledit côté étant situé face à la chambre de combustion.

3. Tige (2) de piston pour moteur à combustion interne, la tige de piston ayant une surface de butée (9) qui se trouve à distance de son axe longitudinal central, s'étend dans la direction circonférentielle de la tige de piston et est conçue pour être serrée contre une surface de butée (7) d'un fond (3) de piston, **caractérisée en ce que** la surface de butée (9) de la tige (2) de piston comporte une première surface (13) qui, vue radialement en coupe, s'étend en ligne droite et forme un angle compris entre 2° et 88° avec un plan perpendiculaire à l'axe longitudinal central de la tige (2) de piston, et une surface secondaire (14) qui forme avec la première surface (13) un angle inférieur à 178° et supérieur à 182°.

4. Tige (2) de piston selon la revendication 3, **caractérisée en ce que**, dans la direction radialement vers l'extérieur, la première surface (13) est inclinée vers l'extrémité opposée de la tige (2) de piston.

5. Piston (1) ou tige (2) de piston selon l'une quelconque des revendications précédentes, **caractérisé en ce que** la première surface (11, 13), vue radialement en coupe, forme un angle de 3° à 20°, et de préférence de 5° à 13°, avec un plan perpendiculaire à l'axe longitudinal central du piston (1) ou de la tige (2) de piston.

6. Piston (1) ou tige (2) de piston selon l'une quelconque des revendications précédentes, **caractérisé en ce que** la surface secondaire (12, 14) est sensiblement parallèle au plan perpendiculaire à l'axe longitudinal central du piston (1) ou de la tige (2) de piston.

7. Piston (1) ou tige (2) de piston selon l'une quelconque des revendications précédentes, **caractérisé en ce que** la première surface (11, 13) est radialement la plus à l'extérieur par rapport à la surface secondaire (12, 14).

8. Piston (1) ou tige (2) de piston selon l'une quelconque des revendications précédentes, **caractérisé en ce que** la surface de butée (7, 9) s'étend sur une distance qui, dans la direction de l'axe central, est inférieure à 0,5 fois et de préférence inférieure à 0,2 fois la distance sur laquelle elle s'étend dans la direction radiale.

9. Piston (1) ou tige (2) de piston selon l'une quelconque des revendications précédentes, **caractérisé en ce qu'**un évidement (10), de préférence ayant de légers arrondis (16), est formé entre la première surface (11, 13) et la surface secondaire (12, 14).

10. Anneau ou élément annulaire (15) destiné à être serré entre un piston (1) selon les revendications 1, 2 ou 5 à 9 et une tige (2) de piston, selon les revendications 3 à 9, **caractérisé en ce que** l'anneau ou l'élément annulaire comporte une première surface de butée (17) d'une forme correspondant sensiblement à la forme de la surface de butée (7) du piston (1), et une surface de butée secondaire (18) d'une forme correspondant sensiblement à la forme de la surface de butée (9) de la tige (2) de piston.

11. Anneau ou élément annulaire (15) selon la revendication 10, **caractérisé en ce que** l'anneau ou l'élément annulaire est en matière autre que celle du fond (3) de piston ou de la tige (2) de piston et, de préférence en matière plus molle ou plus dure que la matière du fond (3) de piston ou de la tige (2) de piston.
